# EUROPEAN PATENT APPLICATION

(11) **EP 2 221 819 A1**
(43) Date of publication of application: **25.08.2010**
(21) Application number: 10151925.4
(22) Date of filing: 28.01.2010
(51) Int. Cl.: G11B 7/24, G11B 7/26

(54) **Method of fabricating nanorod information storage medium**

(30) Priority: 11.02.2009 KR 20090011226
(71) Applicant: Samsung Electronics Co., Ltd., Suwon-si, Gyeonggi-do 442-742 (KR)
(72) Inventor: Kim Joo-ho, Gyeonggi-do (KR); Hong, Tao, Gyeonggi-do (KR); Kim, Dae-hwan, Seoul (KR); Oh, Seung-jin, Seoul (KR); Choi, Sun-rock, Gyeonggi-do (KR)
(74) Representative: Rooney, John-Paul

(57) **Abstract**

A method of fabricating an information storage medium (100), the method including forming a plurality of nanorod recording layers (21) on a substrate (20) by sputtering using a mask (40) having a plurality of nanorod patterns (41).

## Description

### CROSS-REFERENCE TO RELATED APPLICATION

This application claims the benefit of Korean Patent Application No. 10-2009-0011226, filed on February 11, 2009 in the Korean Intellectual Property Office, the disclosure of which is incorporated herein in its entirety by reference.

### BACKGROUND OF THE INVENTION

### 1. Field of the Invention

Aspects of the present invention relate to a method of fabricating a nanorod information storage medium by which a polarization absorption characteristic and a wavelength absorption characteristic of a nanorod-structure are used.

### 2. Description of the Related Art

Generally, nanorods having a predetermined aspect ratio show a high absorption characteristic with respect to a predetermined wavelength of light, and the physical and optical characteristics of the nanorods can be used in various fields. Nanorods are generally fabricated by using a chemical eduction method. In order to use the nanorods that are fabricated by the chemical eduction method, the nanorods are applied to the surface of an object and are then fixed to the surface of the object using several conventional fixing methods. The conventional fixing methods are disadvantageous in many aspects and thus, are limitedly used in various fields. In addition, according to the chemical eduction method in view of a material property, the range of an aspect ratio of the nanorods is wide, though the aspect ratio of the nanorods is not easily adjustable. By easily adjusting the aspect ratio of the nanorods, the nanorods can be applied to a wider field range, and the nanorods can be used for wider purposes. Thus, research on easily adjusting the aspect ratio of the nanorods is needed.

Nanorods are useable in the information recording field by using a polarization absorption characteristic that occurs due to the variation of an optical characteristic of the nanorods caused by the adjustment of the aspect ratio of the nanorods and the variation of a direction of orientation of the nanorods.

### SUMMARY OF THE INVENTION

Aspects of the present invention provide a method of fabricating a high-density capacity information storage medium.

According to an aspect of the present invention, there is provided a method of fabricating an information storage medium, the method including: forming a first nanorod recording layer on a substrate by sputtering using a first mask including a first plurality of patterns corresponding to a first array of nanorods.

The method may further include forming a recording stack including a plurality of recording layers by repeatedly performing the forming of the nanorod recording layers a plurality of times using a plurality of masks, each having different plurality of patterns with different angles of orientation.

The forming of the nanorod recording layers may include forming the nanorod recording layers using different masks, each having different plurality of patterns with different angles of orientation.

The forming of the nanorod recording layers may include: forming a plurality of nanorods by deposition using the mask; and forming a burying layer that buries the plurality of nanorods.

The method may further include forming a distance layer between the nanorod recording layers.

The method may further include: forming a plurality of recording stacks each including a plurality of nanorod recording layers formed by repeatedly performing the forming of the nanorod recording layers a plurality of times; and forming the distance layer between each of the plurality of recording stacks.

According to another aspect of the present invention, there is provided an information storage medium implemented by a recording and/or reproducing apparatus, the information storage medium including: a first nanorod recording layer including a first array of nanorods having a first angle of orientation to enable the recording and/or reproducing apparatus to record and/or reproduce data to/from the first nanorod recording layer by a light having a polarization direction parallel to the first angle of orientation; and a second nanorod recording layer including a second array of nanorods having a second angle of orientation, different from the first angle of orientation, to enable the recording and/or reproducing apparatus to record and/or reproduce data to/from the second nanorod recording layer by a light having a polarization direction parallel to the second angle of orientation.

According to another aspect of the present invention, there is provided a recording apparatus to record data onto an information storage medium including a first nanorod recording layer including a first array of nanorods having a first angle of orientation, and a second nanorod recording layer including a second array of nanorods having a second angle of orientation different from the first angle of orientation, the apparatus including: a light source to emit a recording light; a polarization adjustor to set a polarization direction of the emitted light; and a controller to control the polarization adjustor to set the polarization direction of the emitted light to be parallel to the first angle of orientation when recording the data onto the first recording layer, and to control the polarization adjustor to set the polarization direction of the emitted light to be parallel to the second angle of orientation when recording the data onto the second recording layer.

According to yet another aspect of the present invention, there is provided a reproducing apparatus to reproduce data from an information storage medium including a first nanorod recording layer including a first array of nanorods having a first angle of orientation, and a second nanorod recording layer including a second array of nanorods having a second angle of orientation different from the first angle of orientation, the apparatus including: a light source to emit a reproducing light; a polarization adjustor to set a polarization direction of the emitted light; and a controller to control the polarization adjustor to set the polarization direction of the emitted light to be parallel to the first angle of orientation when reproducing the data from the first recording layer, and to control the polarization adjustor to set the polarization direction of the emitted light to be parallel to the second angle of orientation when reproducing the data from the second recording layer.

According to still another aspect of the present invention, there is provided a method of recording data onto an information storage medium including a first nanorod recording layer including a first array of nanorods having a first angle of orientation, and a second nanorod recording layer including a second array of nanorods having a second angle of orientation different from the first angle of orientation, the method including: emitting a recording light; controlling, by a recording apparatus, a polarization direction of the emitted light to be parallel to the first angle of orientation when recording the data onto the first recording layer; and controlling, by the recording apparatus, the polarization direction of the emitted light to be parallel to the second angle of orientation when recording the data onto the second recording layer.

According to another aspect of the present invention, there is provided a method of reproducing data from an information storage medium including a first nanorod recording layer including a first array of nanorods having a first angle of orientation, and a second nanorod recording layer including a second array of nanorods having a second angle of orientation different from the first angle of orientation, the method including: emitting a reproducing light; controlling, by a reproducing apparatus, a polarization direction of the emitted light to be parallel to the first angle of orientation when reproducing the data from the first recording layer; and controlling, by the recording apparatus, the polarization direction of the emitted light to be parallel to the second angle of orientation when reproducing the data from the second recording layer.

Additional aspects and/or advantages of the invention will be set forth in part in the description which follows and, in part, will be obvious from the description, or may be learned by practice of the invention.

### BRIEF DESCRIPTION OF THE DRAWINGS

The above and other features and advantages of the present invention will become more apparent by describing in detail exemplary embodiments thereof with reference to the attached drawings in which:
FIG. 1A illustrates gold (Au) nanorods before light is irradiated on the Au nanorods, and absorption wavelength peaks according to the lengths of the Au nanorods;
FIG. 1B illustrates the variation of an aspect ratio of the Au nanorods and the shift of an absorption wavelength peak according to the variation of the aspect ratio of the Au nanorods;
FIG. 2A illustrates a substrate that is used in a method of fabricating an information storage medium according to an embodiment of the present invention;
FIG. 2B illustrates a mask that is used in the method of fabricating an information storage medium according to the embodiment of the present invention;
FIG. 3A illustrates a sputtering process of forming a plurality of recording layers by using a nanorod structure used in the method of fabricating an information storage medium, according to an embodiment of the present invention;
FIG. 3B illustrates nanorods that are formed in the method of fabricating an information storage medium, according to an embodiment of the present invention;
FIG. 4 is a graph showing a light absorption characteristic of metal nanorods according to a polarization direction of incident light;
FIG. 5 shows the result of reproduction according to polarization direction of incident light when characters "A" and "B" are recorded in the same area of a nanorod recording layer by using horizontally polarized light and vertically polarized light, respectively;
FIGs. 6A and 6B schematically illustrate an information storage medium that is fabricated by using the method of fabricating an information storage medium, according to embodiments of the present invention;
FIG. 7A is a flowchart illustrating a method of fabricating the information storage medium shown in FIG. 6A, according to an embodiment of the present invention;
FIG. 7B is a flowchart illustrating a method of fabricating the information storage medium shown in FIG. 6B, according to another embodiment of the present invention;
FIG. 8 schematically illustrates first through fourth nanorod recording layers, as the ones shown in FIGs. 6A and 6B, according to an embodiment of the present invention;
FIG. 9 schematically illustrates a stack structure in which the first through fourth nanorod recording layers shown in FIG. 8 are repeatedly formed a plurality of times as nanorod recording stacks, according to an embodiment of the present invention;
FIG. 10 schematically illustrates a three-layer structure of first through third recording layers, as the ones shown in FIGs. 6A and 6B, according to another embodiment of the present invention;
FIG. 11 schematically illustrates a stack structure in which the first through third nanorod recording layers shown in FIG. 10 are repeatedly formed a plurality of times as nanorod recording stacks, according to an embodiment of the present invention;
FIG. 12 schematically illustrates an apparatus for recording and/or reproducing information on/from the information storage medium as shown in FIG. 6A or 6B, according to an embodiment of the present invention; and
FIGs. 13 and 14 schematically illustrate the main optical structure of an optical pickup used in the apparatus shown in FIG. 12, according to embodiments of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

It will be understood that when an element or layer is referred to as being "on," "disposed on," "disposed," or "between" another element or layer, the element or layer can be directly on, disposed on, disposed, or between the other element or layer, or intervening elements or layers can be present. The terms "first," "second," and the like, "primary," "secondary," and the like, as used herein do not denote any order, quantity, or importance, but rather are used to distinguish one element, region, component, layer, or section from another. The terms "front," "back," "bottom," and/or "top" are used herein, unless otherwise noted, merely for convenience of description, and are not limited to any one position or spatial orientation. The terms "a" and "an" do not denote a limitation of quantity, but rather denote the presence of at least one of the referenced item. The suffix "(s)" as used herein is intended to include both the singular and the plural of the term that it modifies, thereby comprising one or more of that term (e.g., the layer(s) includes one or more layers). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various exemplary embodiments. Unless defined otherwise, technical and scientific terms used herein have the same meaning as is commonly understood by one of skill in the art to which this invention belongs.

Hereinafter, a method of fabricating an information storage medium by which nanorods, in which light absorption at a predetermined wavelength bandwidth is used in a surface plasmon phenomenon, are used as an information storage element, according to an embodiment of the present invention will be described as below. Nanorods show large absorptance with respect to light having a polarization direction that is parallel to a lengthwise direction (longitudinal direction) of the nanorods. Conversely, light having a polarization direction that is perpendicular to the lengthwise direction of the nanorods is hardly absorbed. In addition, absorption wavelengths of the nanorods are different according to the length and aspect ratio of the nanorods.

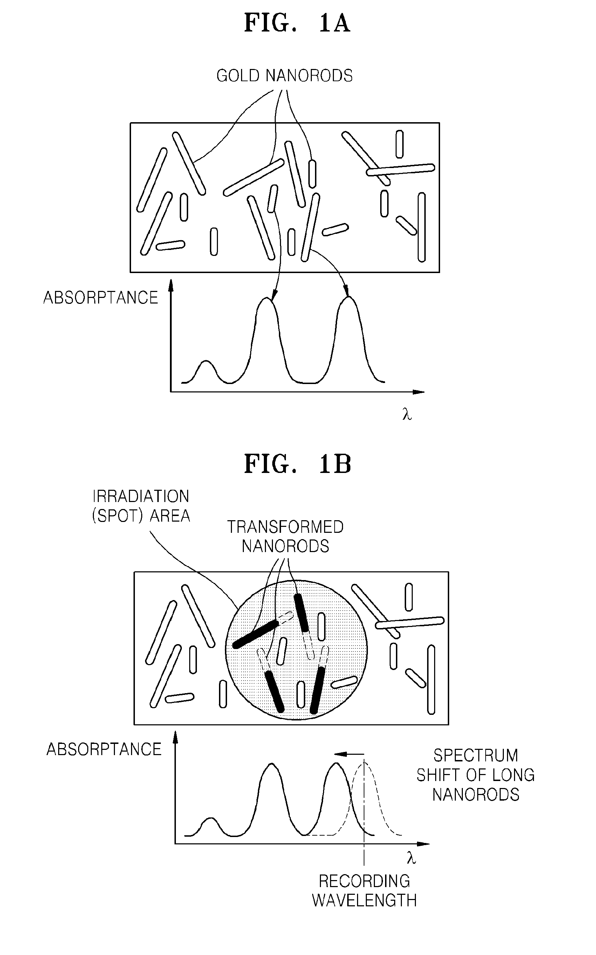

FIG. 1A illustrates gold (Au) nanorods before light is irradiated on the Au nanorods, and absorption wavelength peaks according to the lengths of the Au nanorods. Short nanorods absorb light having a shorter wavelength, compared to long nanorods. FIG. 1B illustrates the variation of the aspect ratio of the Au nanorods due to surface plasmon resonance (SPR) absorption as light is irradiated on the Au nanorods, and the shift of an absorption wavelength peak according to the variation of the aspect ratio of the Au nanorods (Reference: James W.M. Chon, Craig Bullen, Peter Zijlstra, and Min Gu "Spectral Encoding on Gold Nanorods Doped in a Silica Sol-Gel Matrix and Its Application to High-Density Optical Data Storage" Adv. Funct. Mater. 17, 875-880 (2007)).

An information storage medium fabricated according to an embodiment of the present invention uses the characteristics of the above-described nanorods and includes one or more nanorod recording layers (hereinafter, recording layers) in which metal nanorods are orientated to have directivity. Recording layers in a multi-layer structure have different orientation characteristics, and a distance layer may be disposed between the recording layers or at intervals of several recording layers, as will be described in detail later.

When the nanorods are used in the information storage medium according to an embodiment of the present invention, the nanorods are fabricated by sputtering as a method of drying the nanorods and, in particular, are formed directly on a substrate. Unlike a conventional method of fabricating nanorods using chemical eduction, the physical and optical characteristics of the nanorods may be controlled. The aspect ratio and orientation of the nanorods of each of the recording layers depend on a condition of designing a sputtering mask for fabricating the nanorods.

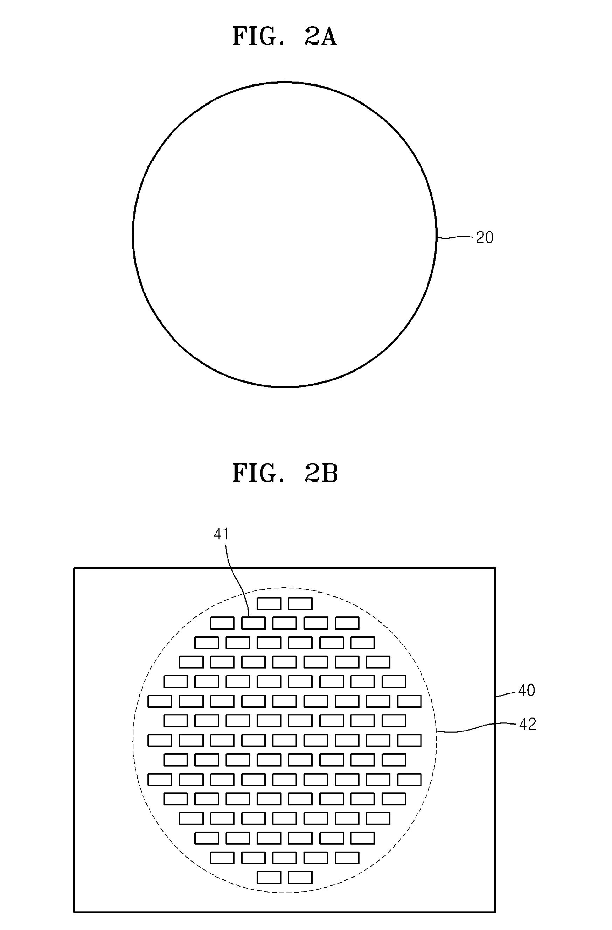

FIG. 2A illustrates a substrate 20 that is used in a method of fabricating an information storage medium according to an embodiment of the present invention. FIG. 2B illustrates a mask 40 that is used in the method of fabricating an information storage medium according to an embodiment of the present invention. Referring to FIG. 2A, in the method of fabricating the information storage medium, the substrate 20 for fabricating the information storage medium on which a recording layer including a plurality of nanorods is to be formed is prepared. Referring to FIG. 2B, the mask 40 having a plurality of patterns corresponding to the nanorods is prepared. The mask 40 includes apertures or windows 41 (hereinafter referred to as "windows") in which a plurality of nanorods is simultaneously formed within an area 42 of the mask 40, and the shape of each of the windows 41 is substantially identical to the shape of each of the nanorods. As shown, the windows 41 have a small nano-size as compared to the size of the mask 40. The plurality of nanorods is simultaneously formed on the surface of the mask 40 by using sputtering as a dry deposition method using the mask 40. An array of the plurality of nanorods operates in a recording layer of the information storage medium.

According to a sputtering method, a target material in a state of an atom or a molecule that originates from a target due to ion collision proceeds toward a substrate. In this case, the target material is masked with the mask. Thus, the target material is deposited on the surface of the substrate corresponding to the windows so that a recording layer is formed on the surface of the substrate. The recording layer formed on the surface of the substrate may include an array of deposited nanorods, and a burying layer and/or protective layer that covers the nanorods. Also, the recording layer may be continuously formed within a chamber by using sputtering. As described above, the shape of the nanorods is substantially identical to the shape of the windows of the mask. Thus, the size and aspect ratio of the nanorods may be adjusted by properly designing the shape of the windows. In other words, nanorods having desired or predetermined physical and optical characteristics may be formed by designing the windows of the mask accordingly. Thus, the dispersion of the characteristics does not exist theoretically, but unavoidable dispersion may occur due to several factors generated when a mask is fabricated or depending on a sputtering condition.

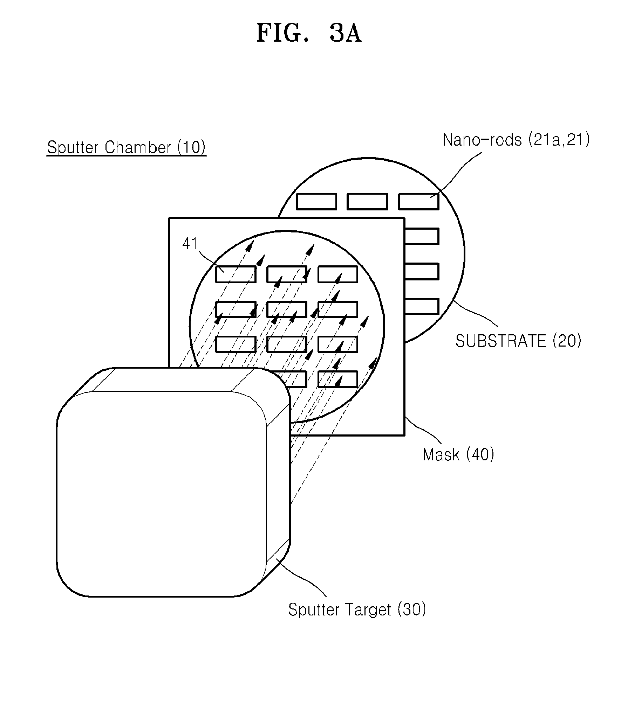

FIG. 3A illustrates a sputtering process of forming a plurality of recording layers by using a nanorod structure in the method of fabricating an information storage medium, according to an embodiment of the present invention. Referring to FIG. 3A, an object in which a plurality of nanorods are to be formed (for example, a substrate 20 for an information storage medium) and a target material 30 face each other within a sputtering chamber 10. A mask 40 including a plurality of windows 41 having the shape of the nanorods with a predetermined aspect ratio is disposed between the substrate 20 and the target material 30.

Ions generated by plasma are collided on the target material 30, and a metal material in a state of an atom or a molecule that originates from the target material 30 passes through the mask 40 and is deposited on the substrate 20 so that a plurality of nanorods 21a are formed on the surface of the substrate 20. The mask 40 includes the windows 41 corresponding to the plurality of nanorods 21a. Thus, a plurality of recording layers 21 including the plurality of nanorods 21a (i.e., a plurality of nanorods in the shape of an array) is formed on the surface of the substrate 20. The nanorods 21a respectively correspond to the windows 41. The above sputtering process is repeatedly performed a plurality of times so that the plurality of recording layers 21 is formed. In this case, each of the recording layers 21 is formed by respectively using masks 40 that are fabricated with different designs, and thus, the plurality of recording layers 21 have different orientation characteristics. A distance layer may be formed between the recording layers or at predetermined intervals of the recording layers. The distance layer may be deposited on the entire surface of the substrate 20 without using the mask 40.

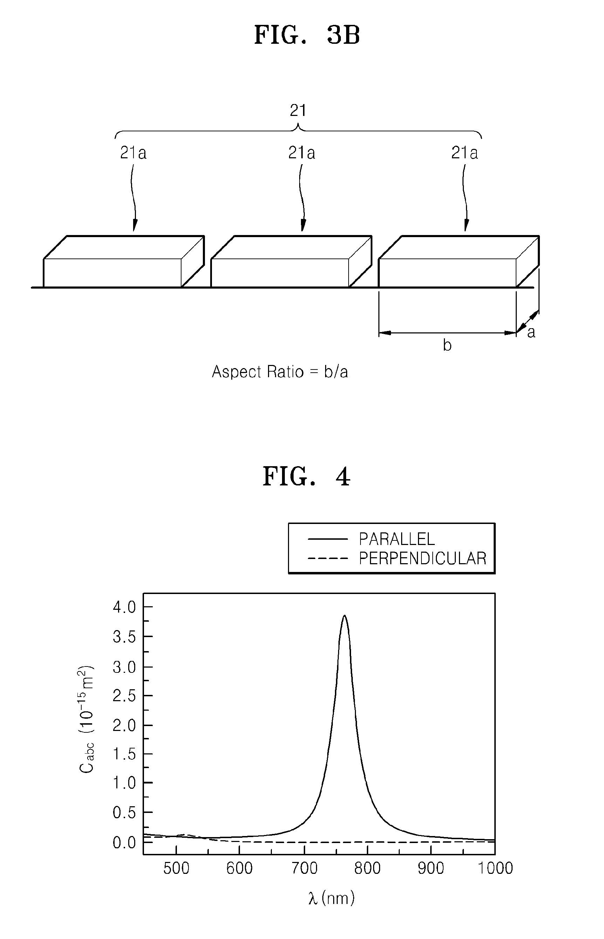

FIG. 3B illustrates the nanorods 21 a formed by sputtering. Referring to FIG. 3B, each of the nanorods 21a of one recording layer 21 is formed by sputtering. Thus, each of the nanorods 21a is a thin film having a long length and narrow width lying against the substrate 20. The ratio of a length b to a width a is an aspect ratio, and the wavelength of light that is absorbed by the nanorods 21a is determined by the aspect ratio.

Metal nanorods show large absorptance with respect to light having a polarization direction that is parallel to a lengthwise direction (longitudinal direction) of the metal nanorods. Conversely, light having a polarization direction that is perpendicular to the lengthwise direction of the metal nanorods is hardly absorbed. In addition, a variation of the aspect ratio causes a variation of a wavelength absorption characteristic. Thus, the variation of an absorption wavelength that occurs due to the variation of absorptance and the variation of an aspect ratio by adjusting the direction of the nanorods with respect to polarization is used.

Before describing the method of fabricating an information storage medium according to an embodiment of the present invention, the structure of the information storage medium will be described. The information storage medium includes one or more recording layers that are orientated at regular intervals so that the metal nanorods have directivity. Thus, in the information storage medium having a plurality of recording layers, information is recorded with polarization that is identical to an orientation direction of a predetermined recording layer, and the information may be recorded only in the predetermined recording layer due to light absorption. In other words, when information is recorded on an information storage medium having a plurality of recording layers, a predetermined recording layer may be selected by determining or selecting a polarization direction of the light. Thus, information may be recorded in several recording layers with different polarization directions. In this way, the predetermined recording layer may be selected by selecting a corresponding polarization. Thus, as an orientation direction of the predetermined recording layer varies, the number of recording layers may increase and, as such, a recording capacity of the information storage medium may increase.

Information is recorded by melting and solidifying nanorods due to polarization absorption and by the variation of an aspect ratio (i.e., reduction in aspect ratio) caused by melting and solidification of the nanorods. For example, a bit of a portion in which variation of an aspect ratio does not occur is "0," and a bit of a portion in which variation of an aspect ratio occurs is "1." Bit information is recorded by melting the nanorods, and thus, the aspect ratio is reduced.

In the information storage medium fabricated according to the current embodiment, multi-layer recording is performed by using the variation of a light absorption characteristic that depends on a polarization direction of the metal nanorods and by the variation of a wavelength absorption characteristic due to the variation of an aspect ratio of the metal nanorods. As introduced briefly and previously, the nanorods absorb short-wavelength light as the length thereof decreases, and the nanorods absorb long-wavelength light as the length thereof increases. When light having a predetermined polarization that is parallel to an orientation direction of a predetermined recording layer and having a predetermined wavelength is focused on a recording layer, the nanorods of the predetermined recording layer melt and then are solidified by SPR absorption. Accordingly, the aspect ratio of the nanorods is reduced, and a peak of an absorption wavelength band (region) of the transformed nanorods is shifted to a shorter wavelength range.

When reproduction light having the same wavelength as the wavelength of the recording light is irradiated on the nanorods by spectral shift, the quantity of light transmitted or reflected is different by the recording light in an area in which the transformed nanorods in which spectral shift occurs are disposed and in other areas. Thus, information recorded according to the quantity of light transmitted or reflected may be detected.

FIG. 4 is a graph showing polarization absorption with respect to a sample in which metal (for example, gold (Au)) nanorods having an aspect ratio of 3.5 are orientated in polyvinylalcohol (PVA) in a shape of a matrix having a refractive index of 1.5. FIG. 4 also shows a difference in light absorption between polarization parallel to the metal nanorods and polarization perpendicular to the metal nanorods. Referring to FIG. 4, the metal nanorods show large absorptance with respect to light having a polarization direction that is parallel to a lengthwise direction (longitudinal direction) of the metal nanorods. Conversely, light having a polarization direction that is perpendicular to the lengthwise direction of the metal nanorods is hardly absorbed.

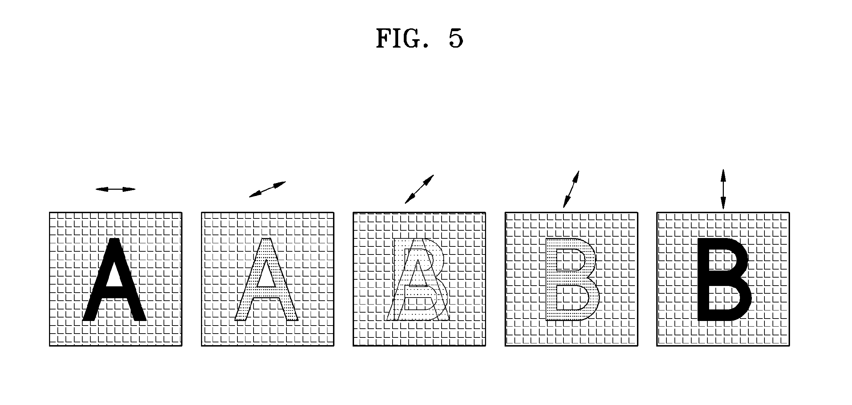

FIG. 5 shows the result of reproduction according to a polarization direction of incident light when characters "A" and "B" are recorded in the same area of a recording layer including nanorods by using horizontally polarized light and vertically polarized light, respectively. The result of reproduction illustrated in FIG. 5 is obtained when light having a wavelength of about 850 nm and an energy of E = ∼7 nJ/pulse is focused by using an objective lens having a numerical aperture (NA) of about 0.7 and with a frequency of 100 kHz. Referring to FIG. 5, only a character "A" is reproduced when horizontally polarized light that is the same as light when a character "A" is recorded is irradiated. Similarly, only a character "B" is reproduced when vertically polarized light that is the same as light when a character "B" is recorded is irradiated. In addition, as irradiated light approaches horizontally polarized light, the shape of the character "A" is mainly shown. As irradiated light approaches vertically polarized light, the shape of the character "B" is mainly shown.

Nanorods that are arranged to be parallel to a horizontal polarization direction are not affected by vertically polarized light. In addition, the nanorods that are arranged to be parallel to a vertical polarization direction are not affected by horizontally polarized light. Thus, when light having a predetermined polarization direction that is parallel to the lengthwise direction of the nanorods and having a predetermined wavelength bandwidth in which light absorption is performed by the nanorods is irradiated, the nanorods melt, and the aspect ratio of the nanorods differs. As an absorption spectrum varies with the variation of the length of the nanorods, information may be recorded or reproduced accordingly.

In other words, nanorods melt in an area in which recording light of a predetermined polarization having a predetermined wavelength is irradiated. Accordingly the aspect ratio of the melted nanorods is different from the aspect ratio of nanorods that are disposed in other areas. Thus, when reproduction light having the same wavelength and the same polarization as the wavelength and polarization of recording light is irradiated, the aspect ratio of the nanorods is different in an area in which the recording light is irradiated. Thus, the quantity of transmitted or reflected reproduction light in the area in which recording light is irradiated is different from that in the area in which recording light is not irradiated. As a result, desired information may be recorded, and recorded information may be exactly read.

In addition, if a plurality of recording layers is formed such that the orientation directions of the nanorods differ between layers, when light is irradiated so as to record or reproduce information on or from a recording layer, the nanorods having different nanorod orientation directions than those of an adjacent recording layer are not affected by the light. Thus, when a plurality of recording layers are formed to have different nanorod orientation directions, a multi-layer information storage medium in which crosstalk does not occur due to the adjacent recording layer may be fabricated without forming a distance layer.

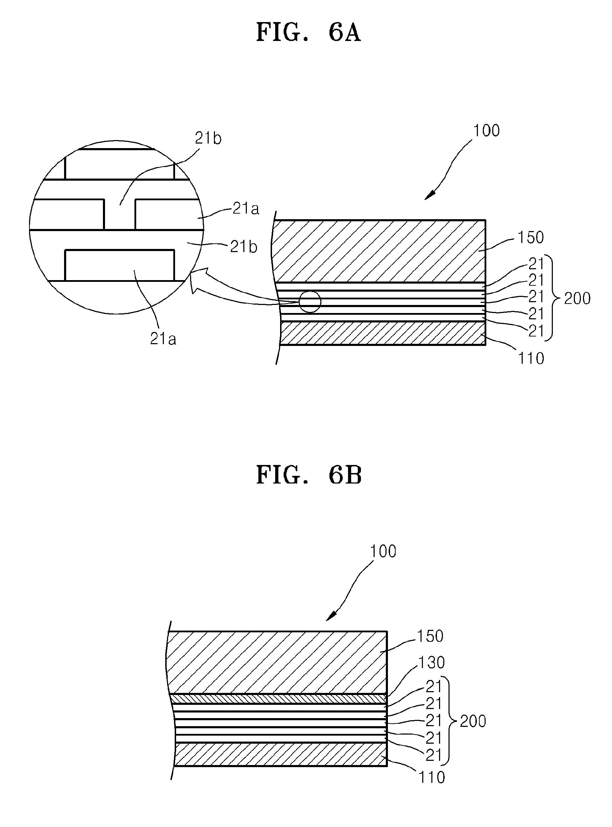

FIGs. 6A and 6B each schematically illustrate an information storage medium 100 that is fabricated by using the method of fabricating an information storage medium, according to embodiments of the present invention. Referring to FIG. 6A, the information storage medium 100 according to the shown embodiment includes a cover layer 110, a nanorod recording stack 200 including a plurality of recording layers 21, and a substrate 150. The nanorod recording stack is disposed from a surface of the substrate 150 on which light beams are incident. The nanorod recording stack 200 is formed by the method of fabricating an information storage medium as described above (i.e., repetitive sputtering using a plurality of masks corresponding to the plurality of recording layers 21). According to another embodiment, the cover layer 110, the nanorod recording stack 200, and the substrate 150 may be arranged in an opposite order to the one shown. In other words, the light beams may be incident through the substrate 150. The recording layers 21 may each include a plurality of nanorods 21a in the shape of an array and may further include a burying layer or a protective layer that covers the nanorods 21 a.

FIG. 6A shows the case where transmitted light is detected during reproduction, and FIG. 6B shows the case where the information storage medium 100 further includes a reflection layer 130 between the substrate 150 and the nanorod recording stack 200 and on which light is reflected so as to detect reflected light during reproduction. Although not shown, the reflection layer 130 may be disposed outside the substrate 150. In addition, although not shown, when the light beams are incident through the substrate 150, the reflection layer 130 may be disposed between the nanorod recording stack 200 and the cover layer 110 or outside the cover layer 110.

The information storage medium 100 shown in FIG. 6A includes the cover layer 110, the nanorod recording stack 200, and the substrate 150, and the information storage medium 100 shown in FIG. 6B includes the cover layer 110, the nanorod recording stack 200, the reflection layer 130, and the substrate 150. However, it is understood that all embodiments of the present invention are not limited thereto. The information storage medium 100 that is fabricated according to aspects of the present invention may further include one or more additional different layers (not shown).

Metal nanorods in the state of a thin film that are formed by sputtering using a mask, as described above are orientated in the nanorod recording stack 200 to have directivity. In this case, the metal nanorods orientated in the nanorod recording stack 200 may be formed to include a material such as Au, platinum (Pt), silver (Ag), palladium (Pd), aluminium (AI), or nickel (Ni). In other words, a metal target during sputtering may include a material such as Au, Pt, Ag, Pd, AI, or Ni.

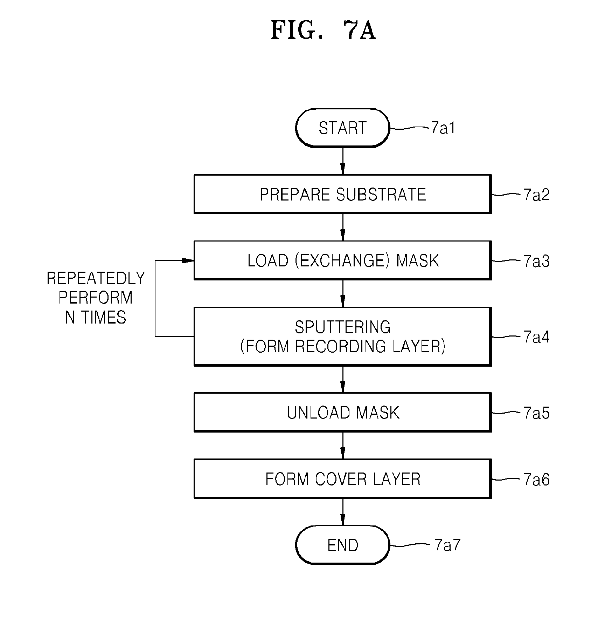

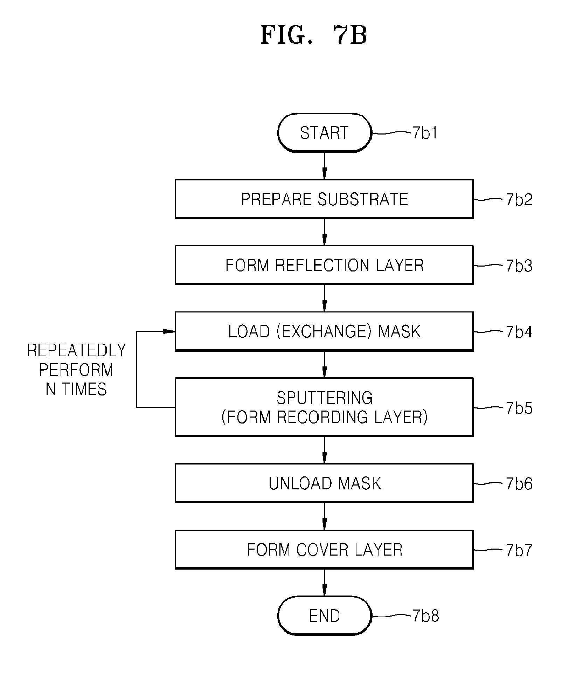

FIGs. 7A and 7B illustrate a method of fabricating the information storage medium 100 shown in FIGs. 6A and 6B, according to embodiments of the present invention. Referring to FIG. 7A, if the fabrication of the information storage medium 100 shown in FIG. 6A starts in operation 7a1, the substrate 150 for the information storage medium 100 is prepared in operation 7a2, and a mask is loaded between a target and the substrate 150 within a sputtering apparatus in operation 7a3. After the mask is loaded, ions are collided on the target by using a general method, and the nanorods 21a for a first recording layer are deposited on the substrate 150 for a predetermined amount of time in operation 7a4. If the formation of the first recording layer is completed, the mask is exchanged for another mask in operation 7a3. In other words, after the previously-used mask is unloaded, a mask for a second recording layer is loaded. After exchanging the mask (operation 7a3), the nanorods 21a for the second recording layer are deposited in operation 7a4. N number of recording layers are sequentially formed by repeatedly exchanging the mask (operation 7a3) and depositing the nanorods 21a (operation 7a3) for a number (N-1) that corresponds to the number N (where N is a natural number) of recording layers, so that the desired nanorod recording stack 200 is obtained by repeatedly performing operation 7a4. After the nanorod recording stack 200 is formed in this way and the mask is unloaded in operation 7a5, the cover layer 110 is formed on the entire surface of the substrate 150 by using a dielectric substance in operation 7a6. Then, the method of fabricating the information storage medium is terminated in operation 7a7. After the nanorods 21a for each recording layer are formed by the above process, a process of forming a burying layer by depositing a dielectric substance to bury the nanorods 21a on the entire surface of the substrate 150 may be additionally performed before or after the mask is exchanged for another mask,.

Referring to FIG. 7B, if the fabrication of the information storage medium 100 shown in FIG. 6B starts in operation 7b1, after the substrate 150 for the information storage medium 100 is prepared in operation 7b2, the reflection layer 130 is formed in operation 7b3. A mask is loaded between a target and the substrate 150 within a sputtering apparatus in operation 7b4. After the mask is loaded (operation 7b4), ions are collided on the target by using a general method, and the nanorods 21a for a first recording layer are deposited on the substrate 150 for a predetermined amount of time in operation 7b5. If the formation of the first recording layer is completed, the mask is exchanged for another mask in operation 7b4. In other words, after the previously-used mask is unloaded, a mask for a second recording layer is loaded in operation 7b4. After exchanging the mask, the nanorods 21a for the second recording layer are deposited in operation 7b5. N number of recording layers are sequentially formed by repeatedly exchanging the mask (operation 7b4) and depositing the nanorods 21a (operation 7b5) for a number (N-1) that corresponds to the number N (where N is a natural number) of recording layers, so that the desired nanorod recording stack 200 is obtained. After the nanorod recording stack 200 is formed in this way and the mask is unloaded in operation 7b6, the cover layer 110 is formed on the entire surface of the substrate 150 by using a dielectric substance in operation 7b7. Then, the method of fabricating an information storage medium is terminated in operation 7b8. After the nanorods 21a for each recording layer are formed by the above process, a process of forming a burying layer by depositing a dielectric substance to bury the nanorods 21a on the entire surface of the substrate 150 may be performed additionally before or after the mask is exchanged for another mask,.

In the information storage medium 100 that is fabricated by using the above-described method, a plurality of recording layers 21 having different nanorod orientation directions are formed in the nanorod recording stack 200. Information may be recorded or reproduced on or from the plurality of recording layers 21 by using differently-polarized lights.

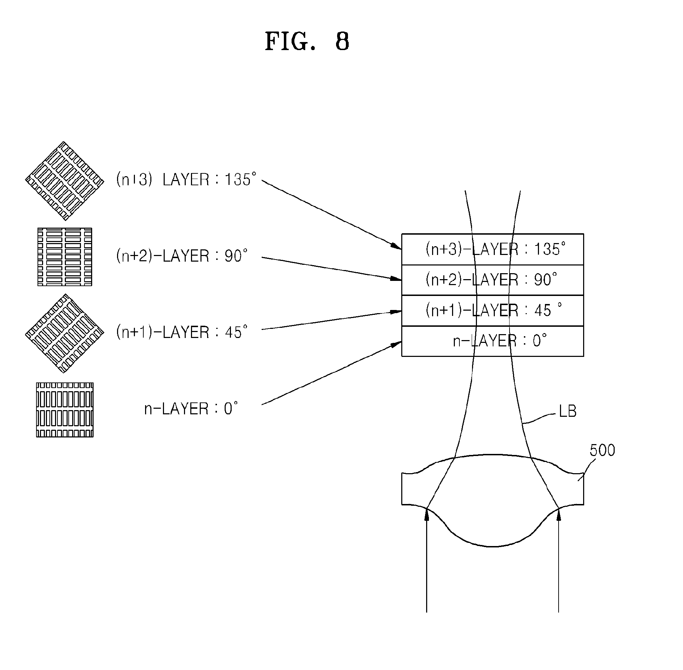

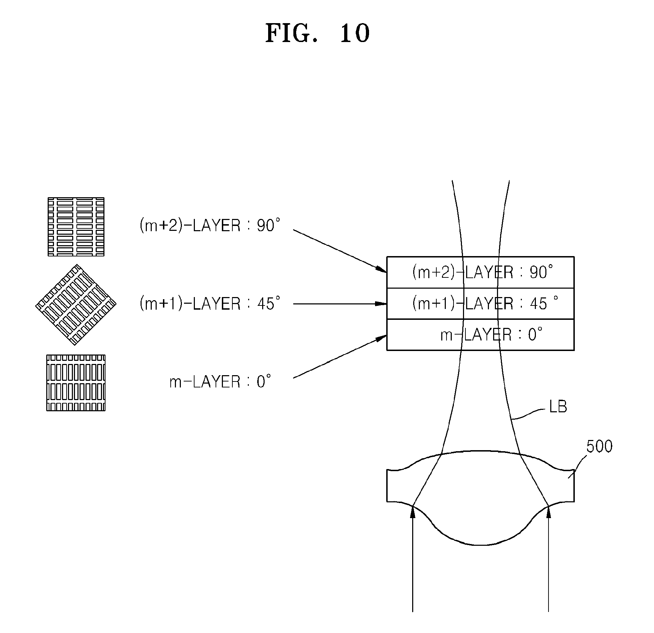

The nanorod recording stack 200 may be formed in such a way that a plurality of recording layers (n, n+1, n+2, n+3)(m, m+1, m+2), where n and m are natural numbers, are within an effective focal depth of a light beam LB that is focused by an objective lens 500 (illustrated in FIGs. 8 and 10) and information is recorded or reproduced on or from each of the plurality of recording layers (n, n+1, n+2, n+3)(m, m+1, m+2) by adjusting a polarization direction of incident light without moving the objective lens 500. In this case, interlayer nanorod orientation directions of the plurality of recording layers (n, n+1, n+2, n+3)(m, m+1, m+2) may differ at equivalent intervals or may differ at non-uniform intervals. An additional distance layer may not be disposed between adjacent recording layers of the plurality of recording layers (n, n+1, n+2, n+3)(m, m+1, m+2) that are within the effective focal depth of the light beams LB that are focused by the objective lens 500. Here, the light beams LB are focused to have a beam waist, and thus, light intensity is uniform to some degree. Accordingly, there is a range of light intensity in which information is recorded without moving the focus of the objective lens 500, wherein the range of light intensity corresponds to the effective focal depth.

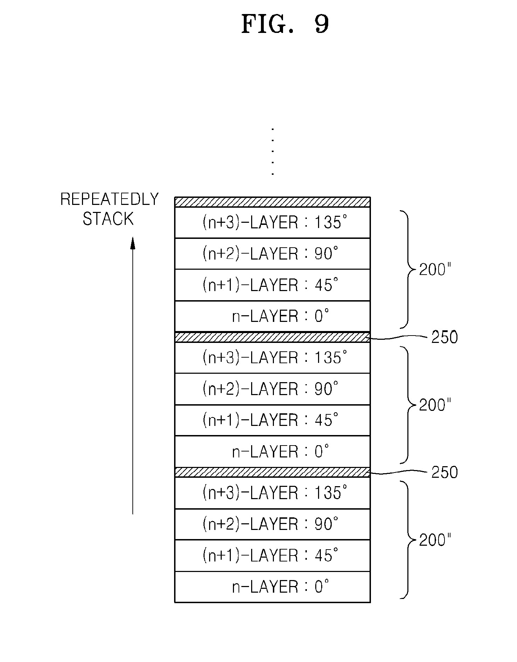

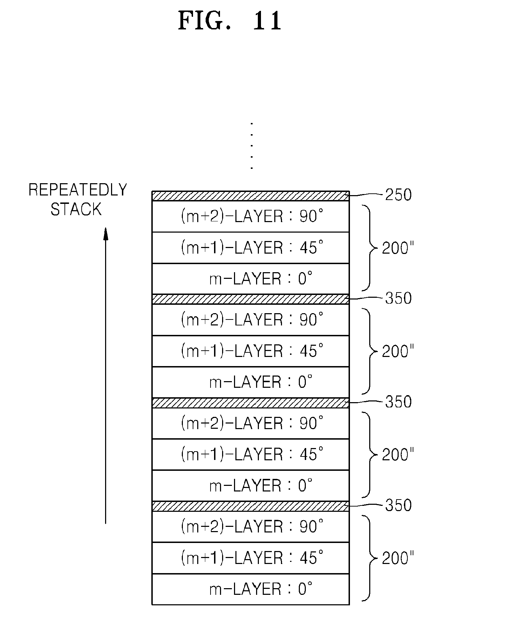

In addition, the plurality of recording layers (n, n+1, n+2, n+3)(m, m+1, m+2) may be repeatedly stacked as nanorod recording stacks 200", and distance layer(s) 250 or 350 may be further disposed between the nanorod recording stacks 200" so as to prevent crosstalk between the nanorod recording stacks 200", as illustrated in FIGs. 9 and 11. The distance layer(s) 250 or 350 is used to obtain a separation distance between the nanorod recording stacks 200 so as to prevent recording or reproducing of information on or from a nanorod recording stack 200" adjacent to one of the nanorod recording stacks 200", when information is recorded or reproduced on or from the plurality of recording layers (n, n+1, n+2, n+3)(m, m+1, m+2) of the one of the nanorod recording stack 200".

The plurality of recording layers (n, n+1, n+2, n+3)(m, m+1, m+2) of each of the nanorod recording stacks 200" are within the effective focal depth of the light beams LB that are focused by the objective lens 500. Accordingly, information may be recorded or reproduced on or from the plurality of recording layers (n, n+1, n+2, n+3)(m, m+1, m+2) of one of the nanorod recording stacks 200" by adjusting a polarization direction of incident light without moving the objective lens 500. When a nanorod recording stack 200", to which the plurality of recording layers (n, n+1, n+2, n+3)(m, m+1, m+2) on or from which information is to be recorded or reproduced belong, is different, for example, in a state where the light beams LB are focused on the nanorod recording stack 200", by adjusting the position of the objective lens 500 in a focal direction, information may be recorded or reproduced on or from the recording layers (n, n+1, n+2, n+3)(m, m+1, m+2) of the nanorod recording stack 200". In this case, interlayer nanorod orientation directions of the plurality of recording layers (n, n+1, n+2, n+3)(m, m+1, m+2) may differ at equivalent intervals, or may differ at non-uniform intervals. In addition, an additional distance layer may not be disposed between adjacent recording layers of the plurality of recording layers (n, n+1, n+2, n+3)(m, m+1, m+2) of each nanorod recording stack 200".

FIG. 8 illustrates a four-layer structure of first through fourth recording layers (n, n+1, n+2, n+3), as the ones illustrated in FIGs. 6A and 6B, having nanorod orientation directions of 0°, 45°, 90°, and 135°. Referring to FIG. 8, when information of about 25 gigabytes (GB) is recorded on each of the first through fourth recording layers (n, n+1, n+2, n+3), a high-capacity information storage medium storing 100 GB of information may be fabricated.

The first through fourth recording layers (n, n+1, n+2, n+3) may be within the effective focal depth of the light beams LB that are focused by the objective lens 500 to record or reproduce information by adjusting a polarization direction of light without moving the objective lens 500. In this case, interlayer nanorod orientation directions of the first through fourth recording layers (n, n+1, n+2, n+3) may differ at equivalent intervals (as illustrated in FIG. 8), or may differ at non-uniform intervals. An additional distance layer may not be disposed between adjacent recording layers of the first through fourth recording layers (n, n+1, n+2, n+3).

FIG. 9 schematically illustrates a stack structure in which the first through fourth recording layers (n, n+1, n+2, n+3) shown in FIG. 8 are repeatedly formed a plurality of times as the nanorod recording stacks 200", according to an embodiment of the present invention. Referring to FIG. 9, a group of the first through fourth recording layers (n, n+1, n+2, n+3) is repeatedly stacked a plurality of times as the nanorod recording stacks 200", and the distance layer 250 is disposed between the nanorod recording stacks 200" so as to prevent crosstalk between the nanorod recording stacks 200". In this case, the first through fourth recording layers (n, n+1, n+2, n+3) of each of the nanorod recording stacks 200" are within the effective focal depth of the light beams LB that are focused by the objective lens 500 so that information may be recorded or reproduced on or from the first through fourth recording layers (n, n+1, n+2, n+3) of one of the nanorod recording stacks 200" by adjusting a polarization direction of incident light without moving the objective lens 500. When a nanorod recording stack 200" to which the first through fourth recording layers (n, n+1, n+2, n+3) on or from which information is to be recorded or reproduced belong varies, for example, in a state where the light beams LB are focused on the nanorod recording stack 200", by adjusting the position of the objective lens 500 in a focal direction, information may be recorded or reproduced on or from the first through fourth recording layers (n, n+1, n+2, n+3)(m, m+1, m+2). In this case, interlayer nanorod orientation directions of the first through fourth recording layers (n, n+1, n+2, n+3) may differ at equivalent intervals (as illustrated in FIGs. 8 and 9), or may differ at non-uniform intervals. An additional distance layer may not be disposed between adjacent recording layers of the first through fourth recording layers (n, n+1, n+2, n+3) of each of the nanorod recording stacks 200".

FIG. 10 illustrates a three-layer structure of first through third recording layers (m, m+1, m+2), as the recording layers shown in FIGs. 6A and 6B, having nanorod orientation directions of 0°, 45°, and 90°. The first through third recording layers (m, m+1, m+2) may be within the effective focal depth of the light beams LB that are focused by the objective lens 500 to record or reproduce information by adjusting a polarization direction of light without moving the objective lens 500. In this case, interlayer nanorod orientation directions of the first through third recording layers (m, m+1, m+2) may differ at equivalent intervals (as illustrated in FIG. 10), or may differ at non-uniform intervals. An additional distance layer may not be disposed between adjacent recording layers of the first through third recording layers (m, m+1, m+2).

FIG. 11 schematically illustrates a stack structure in which the first through third recording layers (m, m+1, m+2) shown in FIG. 10 are repeatedly formed a plurality of times as the nanorod recording stacks 200", according to an embodiment of the present invention. Referring to FIG. 11, a group of the first through third recording layers (m, m+1, m+2) is repeatedly stacked a plurality of times as the nanorod recording stacks 200", and the distance layer 350 is disposed between the nanorod recording stacks 200" so as to prevent crosstalk between the nanorod recording stacks 200". In this case, the first through third recording layers (m, m+1, m+2) of each of the nanorod recording stacks 200" are within the effective focal depth of the light beams LB that are focused by the objective lens 500 so that information may be recorded or reproduced on or from the first through third recording layers (m, m+1, m+2) of one of the nanorod recording stacks 200" by adjusting a polarization direction of incident light without moving the objective lens 500. When a nanorod recording stack 200" to which the first through third recording layers (m, m+1, m+2) on or from which information is to be recorded or reproduced belong varies, for example, in a state where the light beams LB are focused on the nanorod recording stack 200", by adjusting the position of the objective lens 500 in a focal direction, information may be recorded or reproduced on or from the first through third recording layers (m, m+1, m+2). In this case, interlayer nanorod orientation directions of the first through third recording layers (m, m+1, m+2) may differ at equivalent intervals (as illustrated in FIG. 11), or may differ at non-uniform intervals. An additional distance layer may not disposed between adjacent recording layers of the first through third recording layers (m, m+1, m+2) of each of the nanorod recording stacks 200". In order to form the distance layer 250, an operation of forming the distance layer 250 is added to the method described with reference to FIGs. 7A and 7B. To this end, an operation of forming a predetermined number of recording layers of a unit stack, forming a distance layer on the entire surface of a substrate, and forming a predetermined number of recording layers may be repeatedly performed.

Information may be recorded or reproduced on or from the information storage medium of the current embodiment described above, as described below. Light is incident on an information storage medium including a plurality of recording layers each with metal nanorods orientated to have directivity and different orientation directions. While varying a polarization direction of the incident light, information may be recorded or reproduced on or from each or at least part of the plurality of recording layers. When linearly-polarized light is incident, information is recorded or reproduced on or from the recording layers having a nanorod orientation direction that is parallel to the polarization direction of the incident light.

In a recording mode, as described above, the incident light is absorbed by the nanorods of the recording layers having a nanorod orientation direction that is parallel to the polarization direction of the incident light, and the aspect ratio of the nanorods varies. Thus, information may be recorded by irradiating modulated light including information to be recorded. In addition, when recording is performed by varying the polarization of the incident light to be appropriate for each nanorod orientation direction of the plurality of recording layers, information may be recorded on the plurality of recording layers.

When light that is incident in a reproduction mode passes through the recording layers having a nanorod orientation direction that is not parallel to the polarization direction of the incident light, selective absorption is performed, according to the aspect ratio of the nanorods, on the recording layers having a nanorod orientation direction that is parallel to the polarization direction of the incident light, so that information can be reproduced. For example, when light having the same wavelength as the wavelength of light used in the recording mode is used in the reproduction mode, the incident light is not absorbed in an area in which nanorods have a varying aspect ratio during recording, and the incident light is absorbed in the area in which nanorods have a varying aspect ratio during recording. Thus, the quantity of light that passes through the recording layers varies according to the recorded information. Therefore, by detecting the variation of the quantity of light, the recorded information may be reproduced. When the information storage medium 100 does not include the reflection layer 130, as illustrated in FIG. 6A, light that is transmitted through the information storage medium 100 is detected as reproduction light. When the information storage medium 100 includes the reflection layer 130, as illustrated in FIG. 6B, light that is transmitted through predetermined recording layers is reflected by the reflection layer 130 and is returned to the objective lens 500 (that is, proceeds in an opposite direction to a direction of light that is incident on the information storage medium 100). As a result, light that is reflected from the information storage medium 100 may be detected as reproduction light.

Thus, by varying a polarization direction of the incident light to be parallel to the orientation direction of each of the recording layers, information may be recorded or reproduced on or from each or at least part of the plurality of recording layers.

In the information storage medium 100 according to the current embodiment described above, a multi-layer structure of recording layers may be formed by varying nanorod orientation according to each of the recording layers without forming a distance layer. In addition, when a group of a plurality of recording layers is repeatedly stacked, the number of recording layers may increase as desired. As an example, when the plurality of recording layers are an n-layer and an (n+1)-layer (where, n is a negative integer or a positive integer), a nanorod orientation direction of the n+1-layer is different from the nanorod orientation direction of the n-layer. Accordingly, when the n-layer is recorded, a predetermined polarized light to record the n-layer does not react with the n+1 recording layer and thus, recording crosstalk is avoided. Even in the case of reproduction, the variation of the quantity of light transmitted or reflected is detected only on a predetermined recording layer according to a polarization direction of reproduction light, and thus, reproduction crosstalk is avoided.

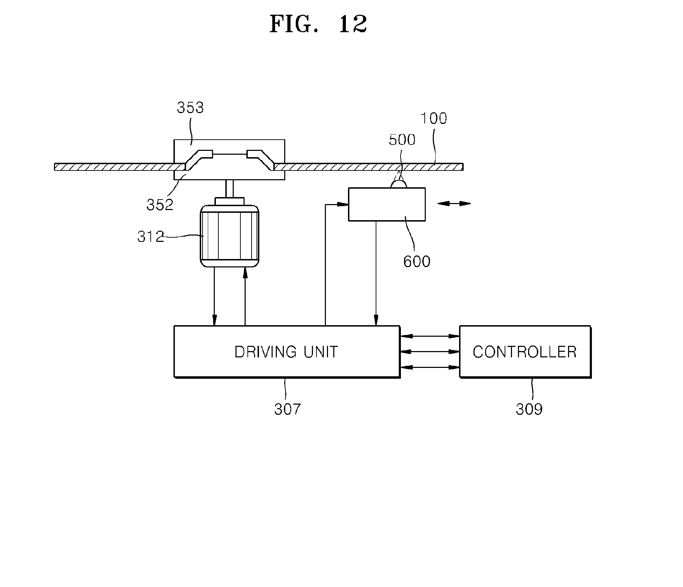

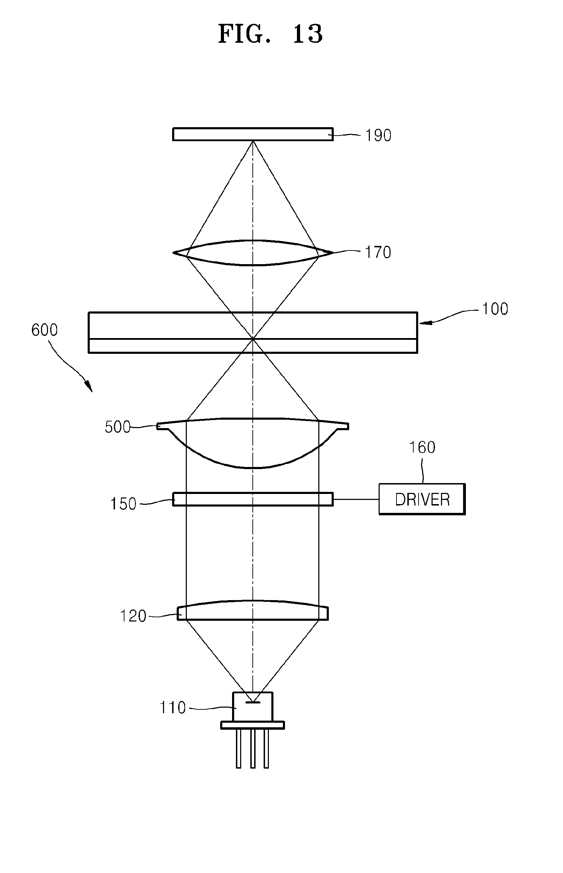

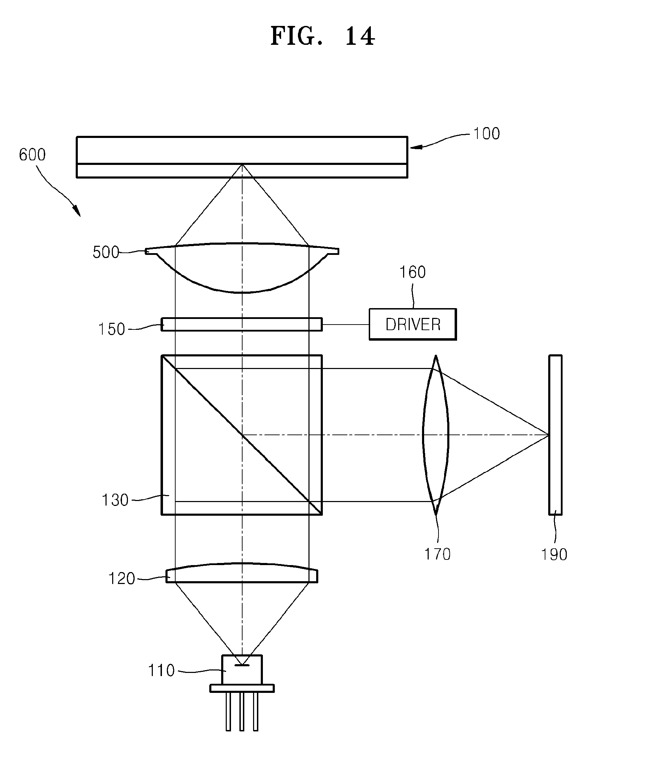

FIG. 12 schematically illustrates an apparatus to record and/or reproduce information on/from the information storage medium 100 as shown in FIG. 6A or 6B, according to an embodiment of the present invention. FIGs. 13 and 14 each schematically illustrate the main optical structure of an optical pickup 600 used in the apparatus shown in FIG. 12, according to embodiments of the present invention.

Referring to FIG. 12, the apparatus includes a spindle motor 312 that rotates the information storage medium 100, the optical pickup 600 that is installed to be movable in a radial direction of the information storage medium 100 and records or reproduces on or from the information storage medium 100, a driving unit 307 that drives the spindle motor 312 and the objective lens 500, and a controller 309 that controls focusing and tracking servo operations of the optical pickup 600. The apparatus also includes a turntable 352, and a clamp 353 for chucking the information storage medium 100.

The optical pickup 600 is disposed to irradiate light on the information storage medium 100 by varying the polarization direction of the irradiated light and to detect light reproduced from the information storage medium 100.

Referring to FIG. 13, the optical pickup 600 may include a light source 110, the objective lens 500 that focuses incident light on the information storage medium 100, a photodetector 190 that detects a light signal from the information storage medium 100, and a polarization adjustor 150 that adjusts a polarization direction of light irradiated on the information storage medium 100.

The optical pickup 600 shown in FIG. 13 is appropriate for the information storage medium 100 shown in FIG. 6A. Referring to FIG. 13, the photodetector 190 is disposed in an opposite direction to the direction of the objective lens 500 with respect to the information storage medium 100 so as to detect light that is transmitted through the information storage medium 100 during reproduction.

Referring to FIG. 13, the optical pickup 600 may include the light source 110, an optical path converter 130 that converts a proceeding path of the incident light, the objective lens 500 that focuses the incident light on the information storage medium 100, the photodetector 190 that detects a light signal from the information storage medium 100, and the polarization adjustor 150 that adjusts a polarization direction of light irradiated on the information storage medium 100.

The optical pickup 600 shown in FIG. 14 is appropriate for the information storage medium 100 shown in FIG. 6B. Referring to FIG. 14, the photodetector 190 is disposed so as to detect light that is reflected from the reflection layer 130 of the information storage medium 100 during reproduction. When the information storage medium 100 has the structure shown in FIG. 6B, the optical path converter 130 is required so as to direct light emitted from the light source 110 toward the information storage medium 100 and to direct light reflected from the information storage medium 100 toward the photodetector 190.

FIGs. 12, 13, and 14 illustrate the most fundamental optical structures for recording or reproducing the information storage medium 100 that has been described with reference to FIGs. 6A and 6B. However, it is understood that the whole optical structure may vary according to different embodiments of the present invention.

The light source 110 is used to emit laser light and may be a semiconductor laser that emits laser light having a predetermined wavelength. In addition, the light source 110 may be a wavelength variable semiconductor laser. For example, the light source 110 may have a structure in which the light source 110 is combined with a plurality of semiconductor laser elements that emit laser lights having different wavelengths, or may be a plurality of wavelength emission semiconductor lasers so as to independently emit laser lights having a plurality of wavelengths. The optical pickup 600 may further include a collimating lens 120 that is disposed on the optical path between the light source 110 and the objective lens 500 and collimates light emitted from the light source 110 in the form of divergence light. Also, a detection lens 170 that focuses light transmitted through or reflected from the information storage medium 100 on the photodetector 190 in a proper size may be disposed in front of the photodetector 190.

The polarization adjustor 150 is used to vary the polarization direction of light irradiated on the information storage medium 100 to be appropriate for recording layers on or from which information is to be recorded or reproduced, and may include a half-wave plate, for example, and the optical pickup 600 may further include the driver 160 that rotates the half-wave plate. By adjusting a rotation angle of the half-wave plate, light that passes through the half-wave plate has a desired linear polarization direction.

Light reflected from the information storage medium 100 is detected by the photodetector 190 disposed in the optical pickup 600, is photoelectrically transformed, is converted into an electrical signal, and is detected by a signal detection circuit (not shown). The signal that is obtained by the signal detection circuit is input to the controller 309 via the driving unit 307. The driving unit 307 controls the rotation speed of the spindle motor 312, amplifies the input signal from the signal detection circuit of the optical pickup 600, and drives the optical pickup 600. The controller 309 transmits to the driving unit 307 a focusing servo command and a tracking servo command that are adjusted based on the input signal, so that focusing and tracking operations of the optical pickup 600 can be performed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of fabricating an information storage medium, the method comprising forming a first nanorod recording layer on a substrate by sputtering using a first mask comprising a first plurality of patterns corresponding to a first array of nanorods.

2. The method as claimed in claim 1, further comprising forming a second nanorod recording layer, different from the first nanorod recording layer, on the substrate by sputtering using a second mask comprising a second plurality of patterns corresponding to a second array of nanorods,
wherin the first nanorod recording layer and the second nanorod recording layer are comprised in a recording stack.

3. The method as claimed in claim 2, further comprising forming a third nanorod recording layer, different from the first and second nanorod recording layers, on the substrate by sputtering using a third mask comprising a third plurality of patterns corresponding to a third array of nanorods,
wherin the first nanorod recording layer, the second nanorod recording layer, and the third nanorod recording layer are provided in sequence in the recording stack, and each of the first, second, and third arrays of nanorods have a different angle of orientation.

4. The method as claimed in claim 1, wherein the forming of the first nanorod recording layer comprises:
forming a plurality of nanorods by deposition using the first mask; and
forming a burying layer that buries the plurality of nanorods.

5. The method as claimed in claim 4, further comprising forming a second nanorod recording layer, different from the first nanorod recording layer, on the substrate by sputtering using a second mask comprising a second plurality of patterns corresponding to a second array of nanorods,
wherein the first nanorod recording layer and the second nanorod recording layer are comprised in a recording stack.

6. The method as claimed in claim 2, further comprising forming another recording stack comprising a plurality of nanorod recording layers, each having a different orientation of nanorods.

7. The method as claimed in claim 6, wherein:
the another recording stack comprises a third recording layer having a third array of nanorods and a fourth recording layer having a fourth array of nanorods; and
an angle of orientation of the first array of nanorods is equal to an angle of orientation of the third array of nanorods, and an angle of orientation of the second array of nanorods is equal to an angle of orientation of the fourth array of nanorods.

8. The method as claimed in any one of the proceeding claims, further comprising forming a reflection layer on the information storage medium.

9. The method as claimed in any one of claims 2 to 8, further comprising forming a distance layer between the first nanorod recording layer and the second nanorod recording layer.

10. An information storage medium implemented by a recording and/or reproducing apparatus, the information storage medium comprising:
a first nanorod recording layer comprising a first array of nanorods having a first angle of orientation to enable the recording and/or reproducing apparatus to record and/or reproduce data to/from the first nanorod recording layer by a light having a polarization direction parallel to the first angle of orientation; and
a second nanorod recording layer comprising a second array of nanorods having a second angle of orientation, different from the first angle of orientation, to enable the recording and/or reproducing apparatus to record and/or reproduce data to/from the second nanorod recording layer by a light having a polarization direction parallel to the second angle of orientation.

11. The information storage medium as claimed in claim 10, further comprising:
a third nanorod recording layer comprising a third array of nanorods having a third angle of orientation, different from the first angle of orientation and the second angle of orientation, to enable the recording and/or reproducing apparatus to record and/or reproduce data to/from the third nanorod recording layer by a light having a polarization direction parallel to the third angle of orientation,
wherein the first nanorod recording layer, the second nanorod recording layer, and the third nanorod recording layer are provided in sequence in a recording stack.

12. The information storage medium as claimed in claim 10, further comprising:
a third nanorod recording layer comprising a third array of nanorods having a third angle of orientation,
wherein the first and second nanorod recording layers are sequentially stacked in a first recording stack, and the third nanorod recording layer is comprised in a second recording stack, different from the first recording stack.

13. The information storage medium as claimed in claim 12, further comprising:
a fourth nanorod recording layer comprising a fourth array of nanorods having a fourth angle of orientation, the fourth recording layer being comprised in the second recording stack,
wherein the first angle of orientation is equal to the third angle of orientation, and the second angle of orientation is equal to the fourth angle of orientation.

14. The information storage medium as claimed in any one of claims 10 to 13, further comprising a reflection layer to reflect a reproducing light from the recording and/or reproducing apparatus.

15. The information storage medium as claimed in any one of claims 10 to 14, further comprising a distance layer between the first nanorod recording layer and the second nanorod recording layer or between the first recording stack and the second recording stack.
